# EUROPÄISCHE PATENTANMELDUNG

(11) **EP 4 642 047 A1**
(43) Veröffentlichungstag der Anmeldung: **29.10.2025**
(21) Anmeldenummer: 25171336.8
(22) Anmeldetag: 17.04.2025
(51) Int. Cl.: H04Q 1/00

(54) **VARIABLES MODUL FÜR MODULTRÄGER**

(30) Priorität: 23.04.2024 DE 102024111323
(71) Anmelder: trans data elektronik Gmbh, 44135 Dortmund (DE)
(72) Erfinder: Andreas, Engel, 44135 Dortmund (DE)
(74) Vertreter: Meissner Bolte Düsseldorf Patentanwälte Rechtsanwälte Partnerschaft mbB

(57) **Zusammenfassung**

Die vorliegende Erfindung betrifft hochvariable Verteilermodule zur Verwendung in modularen Verteilerfeldern zur Verbindung analog oder digital beschalteter Anschlussbuchsen mit weiteren Verteilerfeldern, weiterführenden Leitungen oder Endgeräten, Verfahren zur und Verwendung der Verteilermodule, wobei die Verteilermodule sowohl auf der Frontseite als auch auf der Rückseite eine oder mehrere Anschlussbuchsen aufweisen und sowohl vorwärts als auch rückwärts in Modulträger eingebaut werden können.

## Beschreibung

Alle in der vorliegenden Anmeldung zitierten Dokumente sind durch Verweis vollumfänglich in die vorliegende Offenbarung einbezogen (= incorporated by reference in their entirety).

Die vorliegende Erfindung betrifft hochvariable Verteilermodule zur Verwendung in modularen Verteilerfeldern zur Verbindung analog oder digital beschalteter Anschlussbuchsen mit weiteren Verteilerfeldern, weiterführenden Leitungen oder Endgeräten, Verfahren zur und Verwendung der Verteilermodule, wobei die Verteilermodule sowohl auf der Frontseite als auch auf der Rückseite eine oder mehrere Anschlussbuchsen aufweisen und sowohl vorwärts als auch rückwärts in Modulträger eingebaut werden können.

### Stand der Technik:

Aus der DE 295 101 85 U1 sind Verteilerfelder, insbesondere für Datenleitungen bekannt, mit welchen durch eine gute Abschirmung hohe Übertragungsraten erzielt werden sollen.

Stetig wachsende Datenmengen und Übertragungsraten bedeuten für Rechenzentren weltweit immer größere Herausforderungen. Der begrenzte und teure Raum im Datacenter spielt dabei eine wichtige Rolle.

Heutige Verkabelungssystem sind oft modular aufgebaut und bestehen im Prinzip aus drei Kernkomponenten: Verteilermodul, Modulträger und Verbindungskabel (Trunkkabel, Patchkabel).

Verteilermodule des tML-Systems der Firma trans data elektronik sind Beispiele für am Markt gut bekannte Verteilermodule.

Solche Systeme ermöglichen, zum Beispiel in Rechenzentren oder in industriellen Umgebungen, die Plug-und-Play-Installation innerhalb kürzester Zeit.

Allen bekannten Verteilermodulen ist gemeinsam, dass sie dazu geeignet sind entsprechende Verbindungen herzustellen.

Als weitere Dokumente des Standes der Technik können auch DE 10 2016 103 789 A1; DE 20 2008 001 740 U1 und DE 10 2014 111 198 A1 genannt werden.

Gleichwohl besteht am Markt ein immer weiterwachsendes Bedürfnis noch mehr Verbindungen beziehungsweise noch höhere Übertragungsdichten zu ermöglichen.

Insofern besteht ausgehend von dem bekannten Stand der Technik immer noch ein erhebliches Bedürfnis, den bisherigen Stand der Technik, insbesondere hinsichtlich der Anzahl möglicher Verbindungen beziehungsweise der erreichbaren Übertragungsdichten zu verbessern.

### Aufgabe:

Aufgabe der vorliegenden Erfindung war es demgemäß, bisherigen Stand der Technik zu verbessern und Vorrichtungen und Verfahren zur Verfügung zu stellen, welche die Anzahl möglicher Verbindungen beziehungsweise die erreichbaren Übertragungsdichten verbessern sollen.

Weitere Aufgaben ergeben sich für den Fachmann bei Betrachtung der Ansprüche und aus der nachfolgenden Beschreibung.

### Lösung:

Diese und weitere Aufgaben, die sich für den Fachmann aus der vorliegenden Beschreibung ergeben, werden durch die in den unabhängigen Ansprüchen dargestellten Gegenstände gelöst.

Bevorzugte und besonders vorteilhafte Ausführungsformen sind in den abhängigen Ansprüchen sowie der folgenden Beschreibung dargestellt.

### Detaillierte Beschreibung der Erfindung:

Die vorliegende Erfindung betrifft in einem ersten wesentlichen Gegenstand ein Verteilermodul, bevorzugt zur Verwendung in modularen Verteilerfeldern, insbesondere zum Einschub in Modulträger, höchst bevorzugt in Modulträger von 1 Höheneinheit und einer Breite von 19,2 Zoll, zur Verbindung analog oder digital geschalteter Anschlussbuchsen (mit anderen Worten also Kupplungselementen für Steckverbinder) mit weiteren Verteilerfeldern oder weiterführenden Leitungen oder Endgeräten, wobei das Verteilermodul eine oder mehrere Anschlussbuchsen an einer Frontseite und eine oder mehrere Anschlussbuchsen an seiner Rückseite aufweist und konfiguriert ist, in einer Anzahl zwischen eins und acht, in einem Modulträger, bevorzugt einem Modulträger von 1 Höheneinheit und einer Breite von 19,2 Zoll, eingesetzt und arretiert zu werden, dadurch gekennzeichnet, dass
das Verteilermodul aufgebaut ist aus
- einem Modulgehäusehauptelement,
- einer frontseitigen Blende,
- einer rückseitigen Blende,
- optional einem Gehäusedeckel;

wobei mindestens eine der Blenden mit Anschlussbuchsen versehen ist und die andere Blende ebenfalls mit Anschlussbuchsen versehen ist, oder konfiguriert ist, mit Anschlussbuchsen versehen zu werden, und
wobei das Verteilermodul sowohl an seiner Frontseite als auch an seiner Rückseite Vorrichtungen zur Verbindung mit dem Modulträger aufweist.

Die Vorrichtungen zur Verbindung mit dem Modulträger sind in bevorzugten Ausführungsformen der vorliegenden Erfindung Aufnahmen für Arretierungsmittel.

In besonders bevorzugten Ausführungsformen der vorliegenden Erfindung sind die Vorrichtungen zur Verbindung mit dem Modulträger auf der Frontseite und der Rückseite identisch und in der durch die Frontseite bzw. Rückseite gebildeten Fläche angeordnet. Dabei wird die Frontseite und/oder Rückseite bevorzugt durch die frontseitige bzw. rückseitige Blende gebildet. Weiterhin bevorzugt ist es, dass die Vorrichtungen zur Verbindung mit dem Modulträger keine über die durch die Seitenflächen des Verteilermoduls aufgespannten Ebenen herausragenden Elemente sind, insbesondere keine seitlich überstehenden Laschen bilden.

In diesen Zusammenhang sind besonders bevorzugte Ausführungsformen der vorliegende Erfindung diejenigen, bei denen die Vorrichtungen zur Verbindung mit dem Modulträger auf der Frontseite und der Rückseite des Verteilermoduls an identischen Positionen angeordnet, wobei sich diese Positionen insbesondere am rechten und linken Rand der Frontseite befinden und auf mittiger Höhe der Frontseite.

Es ist zwar im Rahmen der vorliegenden Erfindung möglich, dass die Vorrichtungen zur Verbindung mit dem Modulträger auf Frontseite und Rückseite nicht von identischer Art sind, zum Beispiel also auf der einen Seite glatte Löcher sein können und auf der anderen Seite Schraubgewinde, jedoch ist es erfindungsgemäß bevorzugt, wenn die Vorrichtungen zur Verbindung mit dem Modulträger auf Frontseite und Rückseite von gleicher Art sind, insbesondere Schraubgewinde und höchst bevorzugt Schraubgewinde gleicher Art und Dimension.

Die Verteilermodule der vorliegenden Erfindung sind insbesondere dazu gedacht - und entsprechend konfiguriert - dass sie gedreht werden können, also Frontseite und Rückseite vertauscht werden können. Sie können also insbesondere mit wahlweise der Frontseite oder der Rückseite im Modulträger befestigt werden (über die Vorrichtungen zur Verbindung mit dem Modulträger).

Die Verteilermodule der vorliegenden Erfindung, d.h. deren äußere Form, stellen mithin insbesondere gleichmäßige Quader dar. Insbesondere steht bei einer Betrachtung der erfindungsgemäßen Verteilermodule von vorne oder von hinten an den Seiten nichts über, da die Seiten der erfindungsgemäßen Verteilermodule außen flach sind (bis auf die weiter unten beschriebenen Arretierungsaufnahmen oder Montageschrauben/Montagenieten o.ä., die sich in den Seitenflächen (versenkt) befinden, mit denen das Gehäuse zusammengehalten wird (je nach genauem Gehäuseaufbau) oder Herstellungsbedingte Abweichungen/Toleranzen). Entsprechend entspricht die äußere Form der erfindungsgemäßen Verteilermodule bevorzugt insbesondere nicht denen der in DE 20 2008 001 740 U1 beschriebenen Module.

Die erfindungsgemäßen Verteilermodule weisen keine seitlich überstehenden Vorrichtungen zur Befestigung am Modulträger auf, insbesondere keine Laschen. Verteilermodule mit solchen seitlich überstehenden Befestigungsvorrichtungen eignen sich nicht zum beidseitigen Einbau in Modulträger, also dem gedrehten Einbau, bei dem Front- und Rückseite getauscht sind; sind also für die der vorliegenden Erfindung zugrundeliegenden Idee völlig ungeeignet.

Erfindungsgemäß sind die Vorrichtungen zur Verbindung mit dem Modulträger also die weiblichen Teile der Verteilermodul-Modulträgerverbindung.

In bevorzugten Ausführungsformen der vorliegenden Erfindung weist das Modulgehäusehauptelement an seinen Seiten jeweils
- gehäusefrontseitige seitliche Aufnahmen für Arretierungsmittel zur Arretierung an oder Verbindung mit Befestigungs- oder Trägerkonstruktionen,
- gehäuserückseitige seitliche Aufnahmen für Arretierungsmittel zur Arretierung an oder Verbindung mit Befestigungs- oder Trägerkonstruktionen,
- und gegebenenfalls zusätzlich seitliche Hilfs-Aufnahmen für Arretierungsmittel zur Arretierung an oder Verbindung mit Befestigungs- oder Trägerkonstruktionen, die zwischen den gehäusefrontseitige seitliche Aufnahmen für Arretierungsmittel zur Arretierung an oder Verbindung mit Befestigungs- oder Trägerkonstruktionen und gehäuserückseitige seitliche Aufnahmen für Arretierungsmittel zur Arretierung an oder Verbindung mit Befestigungs- oder Trägerkonstruktionen angeordnet sind,
auf.

Das Modulgehäusehauptelement ist in einigen bevorzugten Ausführungsformen der vorliegende Erfindung U-förmig ausgestaltet und umfasst Boden und zwei Seitenwände. Bei diesen Varianten ist es optional, das Modulgehäuse vor Verwendung mit einem Deckel zu versehen. Der Deckel kann dann einfach zu montieren und zu demontieren sein und zum Beispiel über Schnappverschlüsse oder Schrauben, oder ähnliches, am Modulgehäusehauptelement befestigt werden, oder unlösbar zum Beispiel über Nieten verbunden werden. Es ist in Varianten auch möglich, die erfindungsgemäßen Verteilermodule ohne Deckel zu verwenden. Dies hängt unter anderem auch davon ab, welche Art der modulinternen Verkabelung gewählt wird.

Es ist aber ebenso möglich, das Modulgehäusehauptelement aus einem Stück zu fertigen, umzubiegen und die beiden Enden miteinander zu verbinden; das Modulgehäusehauptelement hätte dann die Form einer rechteckigen Röhre.

Die erfindungsgemäßen Modulträger sind bevorzugt so dimensioniert, dass pro Höheneinheit HE und 19,2 Zoll Breite im Modulträger übereinander zwei Reihen á vier erfindungsgemäße Verteilermodule angeordnet werden können, also bei einer HE und 19,2 Zoll Breite des Modulträgers acht erfindungsgemäße Verteilermodule bestückt werden können.

Die Arretierungsmittel zur Arretierung der Verteilermodule am Modulträger sind im Prinzip nicht beschränkt und können beliebige fachübliche Mittel sein; es ist lediglich erforderlich, dass diese in die/zu den Aufnahmen für Arretierungsmitteln an den erfindungsgemäßen Verteilermodulen passen.

Bevorzugt sind die Arretierungsmittel zur Arretierung der Verteilermodule am Modulträger ausgewählt aus der Gruppe bestehend aus Schrauben, Nieten, Stifte (Pins), Laschen, Federstifte, besonders bevorzugt Stifte (Pins) oder Schrauben, insbesondere Schrauben.

Diese Arretierungsmittel zur Arretierung der Verteilermodule am Modulträger sind komplementär zu den am Verteilermodul befindlichen Vorrichtungen zur Verbindung mit dem Modulträger, insbesondere den Aufnahmen für Arretierungsmittel, und stellen die jeweils männlichen Teile der Verteilermodul-Modulträgerverbindung dar. Insofern können zum Beispiel am Modulträger vorgesehene Stifte vorhanden sein, auf die die jeweiligen Verteilermodule mit ihren Vorrichtungen zur Verbindung mit dem Modulträger, insbesondere den Aufnahmen für Arretierungsmittel, geschoben werden. In anderen Varianten werden die erfindungsgemäßen Verteilermodule zum Beispiel so im Modulträger angeordnet, dass die Vorrichtungen zur Verbindung mit dem Modulträger, insbesondere den Aufnahmen für Arretierungsmittel, der Verteilermodule mit Schraubgewinden im Modulträger auf Deckung sind und dann Modulträger und Verteilermodul durch Einschrauben einer Schraube miteinander befestigt werden.

In besonderen Ausführungsformen können die seitlichen Arretierungsmittel zur Arretierung an oder Verbindung mit Befestigungs- oder Trägerkonstruktionen ausgestaltet sein als Aufnahmen für federgelagerte Stifte, insbesondere solche mit rundem Kopf, die dann beim Einführen des Moduls in die Befestigungs- oder Trägerkonstruktion eingedrückt werden und bei Erreichen der entsprechenden Position in Ausnehmungen an der Befestigungs- oder Trägerkonstruktion einrasten (können).

Im Rahmen der vorliegenden Erfindung sind die Blenden (oder "Teilfrontplatten") in einer Variante zunächst "blanko", das heißt nur für die Breite und Höhe der Front- bzw. Rückseite ausgelegt, aber umfassen noch keine Anschlussbuchsen. Dann können zum Beispiel durch Ausstanzen oder Ausschneiden entsprechender Flächen, in die dann Anschlussbuchsen eingesetzt werden, die Blenden vorbereitet werden. In dem Sinne sind dann die Blenden konfiguriert, mit Anschlussbuchsen versehen zu werden. Es ist auch möglich, die Blenden so herzustellen, dass diese bereits Aussparungen (Ausbrüche) aufweisen, in die dann Anschlussbuchsen eingesetzt werden können. Auch in dem Sinne sind dann die Blenden konfiguriert, mit Anschlussbuchsen versehen zu werden.

Weiterhin ist es möglich, entsprechende Aussparungen vorzubereiten, indem zum Beispiel deren Umrisse aus der Blende weitgehend ausgeschnitten sind, aber noch einige wenige Sollbruchstellen vorhanden sind (in Art einer Perforation), so dass die Flächen bei Bedarf einfach herausgelöst werden können und dann Aussparungen (Ausbrüche) aufweisen, in die dann Anschlussbuchsen eingesetzt werden können. Auch in dem Sinne sind dann die Blenden konfiguriert, mit Anschlussbuchsen versehen zu werden.

In manchen Ausführungsformen der vorliegenden Erfindung ist es bevorzugt, wenn die Blenden bereits (die gewünschten) Anschlussbuchsen enthalten.

Die Anschlussbuchsen (die auch als Kupplungselemente bezeichnet werden können) sind komplementär zu den jeweils gewünschten unterschiedliche Steckverbindern ausgelegt.

Die Blenden unterscheiden sich mithin je nach Anwendung in der Anzahl und Dimension der jeweiligen Aussparungen (Ausbrüche) für die Anschlussbuchsen (Kupplungselemente).

Es ist im Rahmen der vorliegenden Erfindung möglich, in einem Verteilermodul unterschiedliche Steckverbindertypen zu kombinieren, zum Beispiel auf metallischen Leitern beruhende Typen und mit auf Lichtwellenleitern beruhenden Typen. Besonders bevorzugt ist es im Rahmen der vorliegenden Erfindung, wenn die frontseitige Blende und die rückseitige Blende bereits mit den für den gewünschten Anwendungszweck benötigen Anschlussbuchsen versehen sind.

In bevorzugten Ausführungsformen der vorliegenden Erfindung werden die Anschlussbuchsen der frontseitigen und der rückseitigen Blenden unabhängig voneinander ausgewählt aus der Gruppe bestehend aus MMC, LC Duplex, MDC, ST, SC Duplex, E2000, MPO, SN, CS und Kombinationen derer, bevorzugt so, dass die frontseitige Blende und die rückseitige Blende die gleichen Anschlussbuchsen aufweisen. Die genannten Bezeichnungen sind dem Fachmann geläufig und brauchen hier nicht näher definiert zu werden.

In bevorzugten Ausführungsformen der vorliegenden Erfindung weist die frontseitige Blende 12 LC Duplex Ports auf und die rückseitige Blende weist ebenfalls 12 LC Duplex Ports auf.

In bevorzugten Ausführungsformen der vorliegenden Erfindung sind die Blenden einzelne, separate Bauteile, die insbesondere nicht integral mit dem Modulgehäusehauptelement gefertigt sind.

In manchen besonders bevorzugten Ausführungsformen der vorliegenden Erfindung erstrecken sich die Blenden über die gesamte Breite von Frontseite und/oder Rückseite der erfindungsgemäßen Verteilermodule und umfassen die Vorrichtungen zu Verbindung mit dem Modulträger, oder umfassen Öffnungen, die den Zugang zu dahinterliegenden (als Teil des oder befestigt am Modulgehäusehauptelement) die Vorrichtungen zu Verbindung mit dem Modulträger gestatten.

Die Blenden können zum Beispiel die Form rechteckiger Streifen haben, mit entsprechenden Aussparungen für Vorrichtungen zu Verbindung mit dem Modulträger und/oder Anschlussbuchsen. Sie können mit dem Modulgehäusehauptelement beispielsweise über Schrauben, Nieten, Klemmen oder Verkleben verbunden werden.

Ein weiterer Gegenstand der vorliegenden Erfindung ist ein Kit (im Sinne eines Kit-of-parts, insbesondere zur Konfiguration, Konfektionierung und Zusammenstellung von

Verteilermodulen vor Ort) zu Herstellung von Verteilermodulen, insbesondere erfindungsgemäßen Verteilermodulen, umfassend
- Modulgehäusehauptelemente, insbesondere U-förmig, umfassend Boden und zwei Seitenwände,
- Gehäusedeckel,
- frontseitige Blenden,
- rückseitige Blenden,
- Anschlussbuchsen,
- Kabel für die modulinterne Verkabelung,
dadurch gekennzeichnet, dass,
die Blenden Vorrichtungen zur Verbindung mit dem Modulträger aufweisen.

In bevorzugten Ausführungsformen der vorliegenden Erfindung weisen die Modulgehäusehauptelemente der erfindungsgemäßen Kits an ihren Seiten jeweils
- gehäusefrontseitige seitliche Aufnahmen für Arretierungsmittel zur Arretierung an oder Verbindung mit Befestigungs- oder Trägerkonstruktionen,
- gehäuserückseitige seitliche Aufnahmen für Arretierungsmittel zur Arretierung an oder Verbindung mit Befestigungs- oder Trägerkonstruktionen,
- und gegebenenfalls zusätzlich seitliche Hilfs-Aufnahmen für Arretierungsmittel zur Arretierung an oder Verbindung mit Befestigungs- oder Trägerkonstruktionen, die zwischen den gehäusefrontseitige und gehäuserückseitige Aufnahmen angeordnet sind,
auf.

In bevorzugten Ausführungsformen der vorliegenden Erfindung, sowohl der Verteilermodule allgemein als auch des Kits, sind frontseitige und rückseitige Blenden gleich.

Bei den erfindungsgemäßen Verteilermodulen lassen sich in bevorzugten Ausführungsformen quasi beliebige Anschlussbuchsen (Steckverbinder) kombinieren.

In bevorzugten Ausführungsformen der vorliegenden Erfindung weisen die Blenden, und mithin die Verteilermodule Anschlussbuchsen zum Anschluss von metallischen Leitern, insbesondere Kupferleitern, und/oder Anschlussbuchsen zum Anschluss von optischen Lichtwellenleiterkabeln (LWL-Kabeln) auf.

Bevorzugte Anschlussbuchsen zum Anschluss von metallischen Leitern, insbesondere Kupferleitern (oft auch als TP für twisted pair bezeichnet), sind RJ45-Anschlussbuchsen.

In bevorzugten Ausführungsformen weisen die erfindungsgemäßen Verteilermodule Anschlussbuchsen ausgewählt aus der Gruppe bestehend aus MMC, LC Duplex, MDC, ST, SC Duplex, E2000, MPO, SN, CS und Kombinationen derer auf.

Weiterhin ist Gegenstand der vorliegenden Erfindung die Verwendung der erfindungsgemäßen Verteilermodule oder der erfindungsgemäßen Verteilerfelder oder der mittels des erfindungsgemäßen Kits hergestellten Verteilerfelder in Kabelkanälen, Bodentanks oder in Consolidation Points bei der festen oder mobilen Gebäudeverkabelung.

Nicht zuletzt Gegenstand der vorliegenden Erfindung sind modulare Verteilerfelder zur Verbindung mit weiteren modularen Verteilerfeldern oder mit weiterführenden Leitungen oder Endgeräten, welche aus Modulträgern und darin angeordneten erfindungsgemäßen Verteilermodulen oder mittels des erfindungsgemäßen Kits hergestellten Verteilerfelder, aufgebaut sind.

Bevorzugt werden Modulträger im Rahmen der vorliegenden Erfindung bei einer Einbaubreite von 19 Zoll und einer Einbauhöhe von 1 HE mit bis zu acht erfindungsgemäßen Verteilermodulen; bevorzugt ein, zwei, drei, vier, fünf, sechs, sieben oder acht erfindungsgemäßen Verteilermodulen, besonders bevorzugt zwei, vier oder acht erfindungsgemäßen Verteilermodulen, noch weiter bevorzugt vier oder acht erfindungsgemäßen Verteilermodulen, insbesondere acht erfindungsgemäßen Verteilermodulen, bestückt.

Bevorzugte Verteilerfelder der vorliegenden Erfindung enthalten bei einer Einbaubreite von 19 Zoll und einer Einbauhöhe von 1 HE bis zu acht erfindungsgemäße Verteilermodule; bevorzugt ein, zwei, drei, vier, fünf, sechs, sieben oder acht erfindungsgemäße Verteilermodule, besonders bevorzugt zwei, vier oder acht erfindungsgemäße Verteilermodule, noch weiter bevorzugt vier oder acht erfindungsgemäße Verteilermodule, insbesondere acht erfindungsgemäße Verteilermodule. Damit lassen sich in bevorzugten Ausführungsformen durch Verwendung von acht erfindungsgemäßen Verteilermodulen mit LC Duplex Ports an Front- und Rückseite frontseitig und rückseitig auf einer Höheneinheit 96 LC Duplex Ports realisieren.

Die vorliegende Erfindung unterscheidet sich vom Stand der Technik insbesondere durch folgende Merkmale, die so nicht aus dem Stand der Technik bekannt sind:
- Die Verteilermodule des Standes der Technik sind so ausgestaltet, dass sie nur in eine Richtung in Modulträger eingesetzt werden können, d.h. es ist immer die gleiche Seite vorne - die Verteilermodule der vorliegenden Erfindung sind so konfiguriert, dass sie gedreht und beidseitig eingesetzt werden können, d.h. Frontseite und Rückseite können vertauscht werden.
- Die Verteilermodule des Standes der Technik weisen insbesondere keine Aufnahme(n) für Arretierungsmittel auf, die über die Standardaufnahmen für Arretierungsmittel hinausgehen.
- Die erfindungsgemäßen Verteilermodule lassen sich in zwei Richtungen bestücken - an der Rückseite genauso wie im Patchbereich.
- Die Verteilermodule des Standes der Technik weisen auf Front- und Rückseite nicht eine derart hohe Anzahl Anschlussbuchsen auf und ermöglichen mithin nicht derart hohe Packungsdichten.

Mit den erfindungsgemäßen Vorrichtungen und Verfahren wird es mithin im Vergleich zum Stand der Technik ermöglicht, erheblich effizienter zu arbeiten.

Durch die erfindungsgemäßen Vorrichtungen und Verfahren ergeben sich einige signifikante Vorteile gegenüber dem bisherigen Stand der Technik, von denen einige, aber nicht alle, die folgenden sind:
- Mit den erfindungsgemäßen Verteilermodulen ist es unter anderem möglich, die Frontseite auch mit der Ausrichtung nach hinten zu bestücken.
- Die erfindungsgemäßen Verteilermodule bieten die Möglichkeit, im Rückraum dieselbe Portdichte zu realisieren wie im Patchbereich.
- Server und Storage Devices besitzen die Anschlüsse (in der Regel) auf der Rückseite. Durch das Patchen im Rückraum, das mit den erfindungsgemäßen Verteilermodulen möglich wird, können Patchkabellängen kürzer ausfallen und das Kabelvolumen im Schrank reduziert werden.
- Die erfindungsgemäßen Verteilermodule lassen sich mit allen gängigen Steckverbindern integrieren.
- Erfindungsgemäße LWL-Verteilermodule und TP-Verteilermodule lassen sich zusammen in einem Modulträger mit sehr hoher Portdichte gemischt einsetzen.
- In einem erfindungsgemäßen Verteilermodul lassen sich zum Beispiel sowohl an der Frontseite wie auch rückseitig jeweils zwölf LC-Duplex-Ports integrieren. Mit acht Modulen auf einer Höheneinheit ergeben sich damit front- und rückseitig jeweils 96 LC-Duplex-Ports pro Modulträger.
- Somit sind Anwendungen wie Cross Connect, Spine Leaf oder auch Splittermodule mit höchster Portdichte möglich.
- Mit MDC-Steckverbindern lässt sich die Packungsdichte sogar noch einmal duplizieren.
- Je nach Modulbestückung sind mit den erfindungsgemäßen Verteilermodulen Übertragungsraten von 800 GbE oder 1,6 TbE oder noch mehr möglich.

Mit den erfindungsgemäßen Verteilermodulen gewinnt der Anwender vor Ort ein erhebliches zusätzliches Maß an Flexibilität, was mit den Modulen des Standes der Technik bisher nicht möglich war.

Der Fachmann kann die genaue Ausgestaltung der beschriebenen Verteilermodule, sofern diese in dieser Beschreibung nicht explizit beschrieben sind, wie beispielsweise Wanddicken, Materialien etc. im Rahmen seines allgemeinen Fachwissens vornehmen.

Es sei darauf hingewiesen, dass in der vorliegende Erfindung Anmeldung von Blenden geredet wird, die zu den Verteilermodulgehäusen gehören. Zwar ist es erfindungsgemäß bevorzugt, wenn diese eigenständige Werkstücke sind (vgl. oben), jedoch ist dies nicht zwingend der Fall.

Es ist auch denkbar, dass die erfindungsgemäßen Verteilermodule aus einem Metallbogen gefertigt werden, bei dem dann vier Seiten nach oben gebogen werden (zum Beispiel ähnlich, wie mit einem Blatt Papier ein Würfelfaltbogen gemacht werden kann). In diesem Fall sind die dann als Front- bzw. Rückseite fungierenden, hochgebogenen Teile als Blende im Sinne der vorliegende Erfindung zu verstehen (in diesem Fall wäre das erfindungsgemäße Kit-of-parts ohne Blenden und ohne Deckel ausgeführt).

Es sei darauf hingewiesen, dass in einigen Varianten der vorliegenden Erfindung die Verteilermodulgehäuse aus Metall gefertigt sind, wie es in der Branche üblich ist.

In anderen bevorzugten Varianten der vorliegenden Erfindung sind die Verteilermodulgehäuse aus Kunststoff gefertigt., Dies kann die kompletten Verteilermodule betreffen, oder einzelne oder mehrere Elemente aus der Gruppe bestehend aus Modulgehäusehauptelementen, Blenden und Deckeln.

Sofern bei der Beschreibung der erfindungsgemäßen Vorrichtungen Teile oder die ganze Vorrichtung als "bestehend" aus gekennzeichnet sind, ist darunter zu verstehen, dass sich dies auf die genannten wesentlichen Bestandteile bezieht. Selbstverständliche oder inhärente Teile wie zum Beispiel Schrauben oder Nieten sind dadurch nicht ausgeschlossen.

Die verschiedenen Ausgestaltungen der vorliegenden Erfindung, z.B. - aber nicht ausschließlich - diejenigen der verschiedenen abhängigen Ansprüche, können dabei in beliebiger Art und Weise miteinander kombiniert werden, sofern solche Kombinationen sich nicht widersprechen.

### Figurenbeschreibung:

Die vorliegende Erfindung wird im Folgenden mit Bezugnahme auf die Zeichnungen näher erläutert. Die Zeichnungen sind dabei nicht limitierend auszulegen und nicht maßstabsgetreu. Die Zeichnungen sind schematisch und sind auf die für die vorliegende Erfindung und ihr Verständnis wesentlichen Merkmale reduziert, beispielsweise sind Schrauben etc. nicht oder nicht im Detail dargestellt.

Gleiche Bezugszeichen zeigen in der Figur, der Beschreibung und den Ansprüchen gleiche Merkmale.

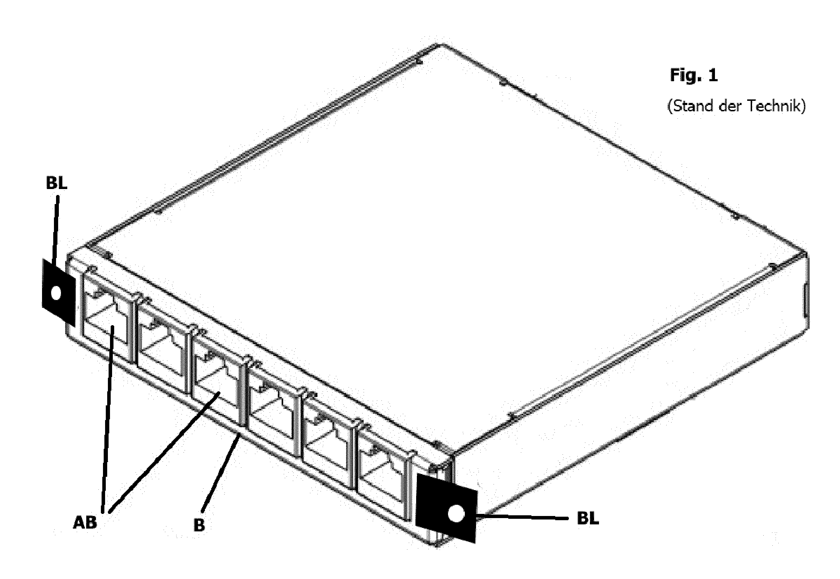

Figur 1 zeigt ein Verteilermodul des Standes der Technik. Wie aus der Figur ersichtlich, weist dieses Modul an der Frontseite zwei seitlich nach außen überstehende Befestigungslaschen **BL** (hier dargestellt als Parallelogramme mit Loch, durch das eine Schraube geführt würde) zur Befestigung an einem Modulträger auf. Gezeigt ist hier beispielhaft ein Modul des Stand der Technik, dessen Blende **B** mit sechs RJ-45 Anschlussbuchsen **AB**; jedoch sind im Stand der Technik natürlich auch andere Anschlussbuchsen üblich.

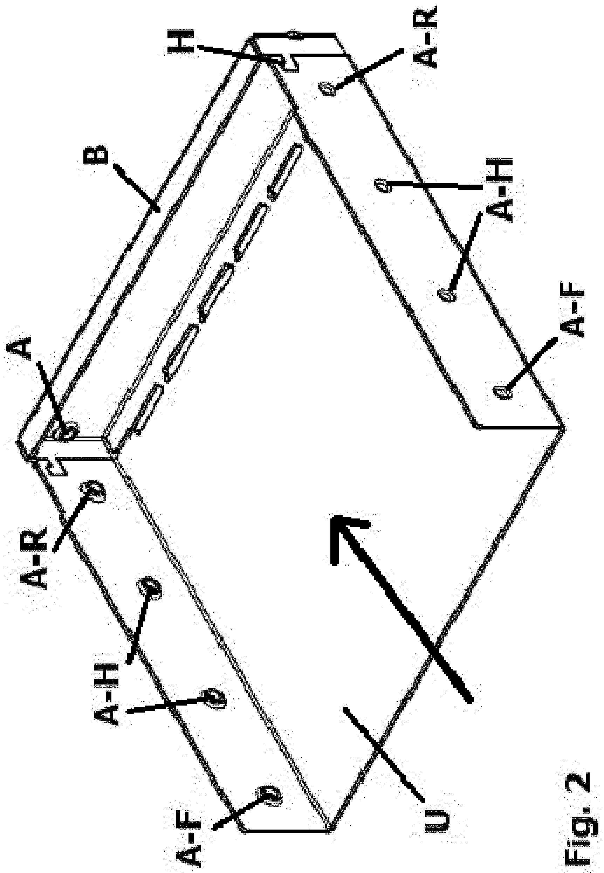

Figur 2 zeigt im Gegensatz zu Figur 1 ein Gehäuse eines erfindungsgemäßen Verteilermoduls, bei dem die Vorrichtungen **A** zur Verbindung mit dem Modulträger nicht seitlich überstehen, sondern in der (hier der Übersichtlichkeit halber gezeigten) Rückseite, also insbesondere in der Blende **B** angeordnet sind.

Weiterhin sind gezeigt die optionalen gehäusefrontseitige Aufnahme für Arretierungsmittel zur Arretierung an oder Verbindung mit Befestigungs- oder Trägerkonstruktionen **A-F,** die gehäuserückseitigen Aufnahme für Arretierungsmittel zur Arretierung an oder Verbindung mit Befestigungs- oder Trägerkonstruktionen **AR,** sowie die zusätzlich optionalen Hilfs-Aufnahmen für Arretierungsmittel zur Arretierung an oder Verbindung mit Befestigungs- oder Trägerkonstruktionen **A-H** in etwa jeweils bei einem Drittel der Seite. Illustriert ist hier auch das Hauptelement des Gehäuses des erfindungsgemäßen Verteilermoduls, welches hier im Prinzip eine U-Form aufweist und daher mit **U** bezeichnet ist. In der Figur ist, wie gesagt, der Übersichtlichkeit halber nur an der Rückseite eine Blende **B** dargestellt, die in der Figur der Übersichtlichkeit halber auch nicht mit Anschlussbuchsen AB dargestellt ist. Ebenso ist zur Illustration kein Gehäusedeckel D gezeigt. In der Figur sind optionale Befestigungsmittel **H** gezeigt, die hier eine Hakenform haben, mit der die Blende **B** am Gehäusehauptteil **U** befestigt ist. Diese Befestigungsmittel **H** sind bevorzugt so ausgestaltet, dass die Blende **B** einfach eingesetzt, herausgenommen bzw. getauscht werden kann, um schnell und einfach andere Anschlussbuchsbestückungen zu realisieren; es ist im Prinzip aber auch möglich, dass die Blenden solche Befestigungsmittel nicht aufweisen, sondern zum Beispiel einfach aufgeklemmt, aufgeklebt, oder durch Umbiegen fixiert werden. Der Pfeil gibt die übliche Einschubrichtung des Verteilermoduls in den Modulträger an; gemäß vorliegender Erfindung jedoch, kann das Modul um 180° gedreht werden (dann wäre die Blende **B** unten links im Bild) und mit der Rückseite zuerst in den modulträger geschoben werden.

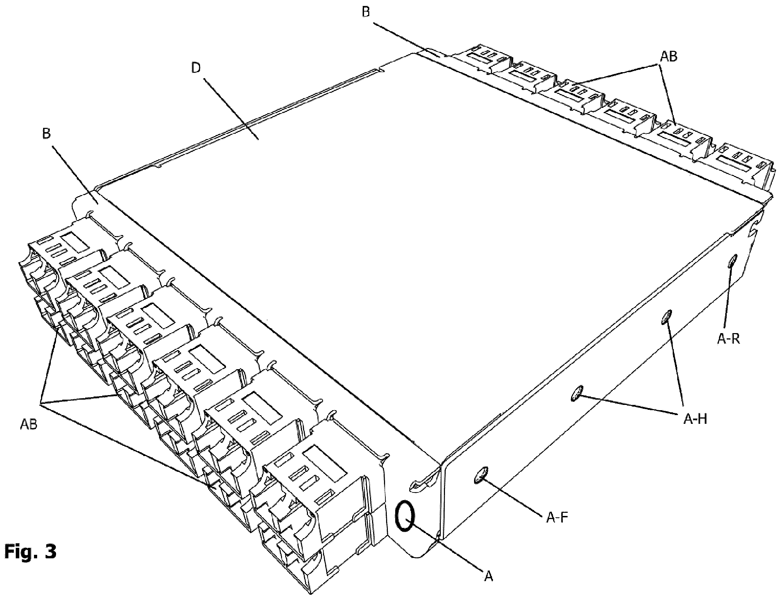

Figur 3 zeigt ein erfindungsgemäßes Verteilermodul. In dieser Figur ist dargestellt, dass das Modul auf Front- und Rückseite jeweils Blenden **B** aufweist, die jeweils voll mit zwölf LC Duplex Ports als Anschlussbuchsen **AB** bestückt ist. Gut erkennbar ist hier rechts vorne eine Vorrichtung **A** zur Verbindung mit dem Modulträger. Das Verteilermodul weist an entsprechenden Stellen vorne links, sowie hinten rechts und links ebensolche Vorrichtungen **A** auf, die jedoch durch Elemente des Moduls verdeckt sind. Auch hier sind die optionalen Aufnahmen **A-F** und **A-R** und zwei zusätzliche optionale Hilfs-Aufnahmen **A-H** in etwa jeweils bei einem Drittel der Seite zu erkennen. In dem gezeigten Beispiel ist das Verteilermodul nach oben hin mit einem Deckel **D** versehen.

### Bezugszeichenliste:

- A: Vorrichtung zur Verbindung mit Modulträger (weiblicher Teil der Verteilermodul-Modulträgerverbindung)
- AB: Anschlussbuchse (zum Beispiel RJ-45 Steckerports oder LC Duplex-Ports - andere sind möglich)
- A-F: gehäusefrontseitige seitliche Aufnahme für Arretierungsmittel
- A-R: gehäuserückseitige seitliche Aufnahme für Arretierungsmittel
- A-H: seitliche Hilfs-Aufnahme für Arretierungsmittel
- B: Blende (Frontseite oder Rückseite); gegebenenfalls mit Anschlussbuchsen, zum Beispiel LC Duplex-Ports, versehen
- U: U-förmiges Modulgehäusehauptelement
- D: Deckel des Modulgehäuses
- H: (optionales) Befestigungsmittel der Blende (zur Befestigung am Gehäusehauptelement)

## Patentansprüche

1. Verteilermodul, bevorzugt zur Verwendung in modularen Verteilerfeldern, insbesondere zum Einschub in Modulträger, höchst bevorzugt in Modulträger von 1HE und einer Breite von 19,2 Zoll, zur Verbindung analog oder digital geschalteter Anschlussbuchsen (AB) mit weiteren Verteilerfeldern oder weiterführenden Leitungen oder Endgeräten,
wobei das Verteilermodul
- eine oder mehrere Anschlussbuchsen (AB) an einer Frontseite, und
- eine oder mehrere Anschlussbuchsen (AB) an seiner Rückseite aufweist, und
- konfiguriert ist, in einer Anzahl zwischen eins und acht in einem Modulträger, bevorzugt einem Modulträger von 1 Höheneinheit und einer Breite von 19,2 Zoll, eingesetzt und arretiert zu werden,
**dadurch gekennzeichnet, dass**
das Verteilermodul aufgebaut ist aus
- einem Modulgehäusehauptelement (U),
- einer frontseitigen Blende (B),
- einer rückseitigen Blende (B),
- optional einem Gehäusedeckel (D);
wobei
- eine der Blenden (B) mit Anschlussbuchsen (AB) versehen ist, und
- die andere Blende ebenfalls mit Anschlussbuchsen (AB) versehen ist, oder konfiguriert ist, mit Anschlussbuchsen (AB) versehen zu werden, und
- wobei das Verteilermodul sowohl an seiner Frontseite als auch an seiner Rückseite Vorrichtungen (A) zur Verbindung mit dem Modulträger aufweist. [

2. Verteilermodul nach Anspruch 1, **dadurch gekennzeichnet, dass** die Vorrichtungen (A) zur Verbindung mit dem Modulträger Aufnahmen für Arretierungsmittel sind.

3. Verteilermodul nach Anspruch 1 oder 2, **dadurch gekennzeichnet, dass** die Vorrichtungen (A) zur Verbindung mit dem Modulträger auf der Frontseite und der Rückseite identisch und in der durch die Frontseite bzw. Rückseite gebildeten Fläche angeordnet sind, bevorzugt keine über die durch die Seitenflächen des Verteilermoduls aufgespannte Ebene herausragenden Elemente sind, insbesondere keine seitlich überstehenden Laschen bilden.

4. Verteilermodul nach einem der Ansprüche 1 bis 3, **dadurch gekennzeichnet, dass** das Modulgehäusehauptelement (U) an seinen Seiten jeweils
- gehäusefrontseitige seitliche Aufnahmen (A-F) für Arretierungsmittel zur Arretierung an oder Verbindung mit Befestigungs- oder Trägerkonstruktionen,
- gehäuserückseitige seitliche Aufnahmen (A-R) für Arretierungsmittel zur Arretierung an oder Verbindung mit Befestigungs- oder Trägerkonstruktionen,
- und gegebenenfalls zusätzlich seitliche Hilfs-Aufnahmen (A-H) für Arretierungsmittel zur Arretierung an oder Verbindung mit Befestigungs- oder Trägerkonstruktionen, die zwischen den Aufnahmen (A-F) und (AR) angeordnet sind,
aufweist.

5. Verteilermodul nach einem der Ansprüche 1 bis 4, insbesondere nach Anspruch 1, **dadurch gekennzeichnet, dass** die Anschlussbuchsen (AB) der frontseitigen und der rückseitigen Blenden (B) unabhängig voneinander ausgewählt sind aus der Gruppe bestehend aus MMC, LC Duplex, MDC, ST, SC Duplex, E2000, MPO, SN, CS und Kombinationen derer, bevorzugt so, dass die frontseitige Blende (B) und die rückseitige Blende (B) die gleichen Anschlussbuchsen (AB) aufweisen.

6. Verteilermodul nach einem der Ansprüche 1 bis 5, insbesondere nach Anspruch 1, **dadurch gekennzeichnet, dass** die frontseitige Blende (B) als Anschlussbuchsen (AB) 12 LC Duplex Ports aufweist und die rückseitige Blende (B) als Anschlussbuchsen (AB) ebenfalls 12 LC Duplex Ports aufweist.

7. Kit zu Herstellung von Verteilermodulen, insbesondere nach einem der Ansprüche 1 bis 6, umfassend
- Modulgehäusehauptelemente (U), insbesondere U-förmig, umfassend Boden und zwei Seitenwände,
- Gehäusedeckel (D),
- frontseitige Blenden (B),
- rückseitige Blenden (B),
- Anschlussbuchsen (AB),
- Kabel für die modulinterne Verkabelung,
**dadurch gekennzeichnet, dass**,
die Blenden (B) Vorrichtungen (A) zur Verbindung mit dem Modulträger aufweisen.

8. Kit nach Anspruch 7, **dadurch gekennzeichnet, dass** die Modulgehäusehauptelemente (U) an ihren Seiten jeweils
- gehäusefrontseitige seitliche Aufnahmen (A-F) für Arretierungsmittel zur Arretierung an oder Verbindung mit Befestigungs- oder Trägerkonstruktionen,
- gehäuserückseitige seitliche Aufnahmen (A-R) für Arretierungsmittel zur Arretierung an oder Verbindung mit Befestigungs- oder Trägerkonstruktionen,
- und gegebenenfalls zusätzlich seitliche Hilfs-Aufnahmen (A-H) für Arretierungsmittel zur Arretierung an oder Verbindung mit Befestigungs- oder Trägerkonstruktionen, die zwischen den Aufnahmen (A-F) und (AR) angeordnet sind,
aufweisen.

9. Kit nach Anspruch 7 oder 8, **dadurch gekennzeichnet, dass** die frontseitigen und rückseitigen Blenden (B) gleich sind.

10. Verteilerfelder zur Verbindung mit weiteren modularen Verteilerfeldern oder mit weiterführenden Leitungen oder Endgeräten, welche aus in Modulträgern und darin angeordneten Verteilermodulen gemäß einem der Ansprüche 1 bis 6 oder mittels des Kits nach einem der Ansprüche 7 bis 9 hergestellten Verteilermodule aufgebaut sind.

11. Verwendung der Verteilermodule nach einem der Ansprüche 1 bis 6 oder von mittels des Kits nach einem der Ansprüche 7 bis 9 hergestellten Verteilermodule für/als Cross Connect-, Spine Leaf- oder Splittermodule.

12. Verwendung der Verteilermodule nach einem der Ansprüche 1 bis 6 oder von mittels des Kits nach einem der Ansprüche 7 bis 9 hergestellten Verteilermodule oder der Verteilerfelder gemäß Anspruch 10 in Kabelkanälen, Bodentanks oder in Consolidation Points bei der festen oder mobilen Gebäudeverkabelung.
